# EUROPEAN PATENT SPECIFICATION

(11) **EP 1 872 890 B1**
(45) Date of publication and mention of the grant of the patent: **05.11.2008**
(21) Application number: 07109778.6
(22) Date of filing: 07.06.2007
(51) Int. Cl.: B23D 35/00, B21D 28/20

(54) **Cutter for cutting a web-like or sheet-like material**
Schneidegerät zum Schneiden eines bahn- oder blattförmigen Materials
Scie pour couper un matériau en forme de bande ou de feuille

(30) Priority: 29.06.2006 FI 20065451
(43) Date of publication of application: 02.01.2008
(73) Proprietor: Pivatic OY, 05800 Hyvinkää (FI)
(72) Inventor: Virtanen, Mika, 00330 Helsinki (FI); Mäenpää, Ari, 05400 Jokela (FI)
(74) Representative: LEITZINGER OY

(56) References cited:
- WO-A-02/38300
- FR-A- 867 567
- FR-A- 1 044 384
- US-A- 1 355 796
- US-A- 3 701 276

## Description

The present invention relates to a sheet working machine comprising a cutter for cutting a web-like or sheet-like metal material.

An objective of the invention is to provide a simple cutter solution, which enables the use of a single device for a variety of cutting operations. The cutter of the invention is integrated with the rest of a sheet working machine.

In order to achieve this objective, a cutter of the invention includes a blade pivotable around a horizontal axis to various angular positions, by means of which the cutter is enabled to perform optionally a cross-cutting operation of the material or a partial cutting operation of at least one edge, and that the cutter is disposed outside the machine frame and adapted to be operated by means of the push plate generating said working force.

The cutter is disposed in connection with the rest of a sheet working machine and one specific application is the integration of a cutter with a sheet working machine such as disclosed in the present Applicant's earlier international patent application WO 02/38300 A1, which includes a push plate (buffer disc) for operating working tools and which push plate is adapted to be combined with a cutter for operating the cutter by means of said push plate. WO 02/38300 A1 defines the preamble of claim 1. Documents FR 867 567 A, FR-A-1 044 384 and US-A-1 355 796 disclose general state of the art.

The invention will now be described more closely with reference to the accompanying drawings, in which:
- Fig. 1: shows in a schematic view of principle one embodiment for a cutter of the invention,
- Fig. 1a: shows a tool for the cutter of fig. 1 in various angular positions,
- Fig. 2: shows in a schematic plan view a sheet working machine fitted with a cutter of the invention,
- Fig. 3: shows the sheet working machine of fig. 2 in a schematic side view, and
- Fig. 4: shows an enlarged detail in the sheet working machine of figs. 2 and 3.

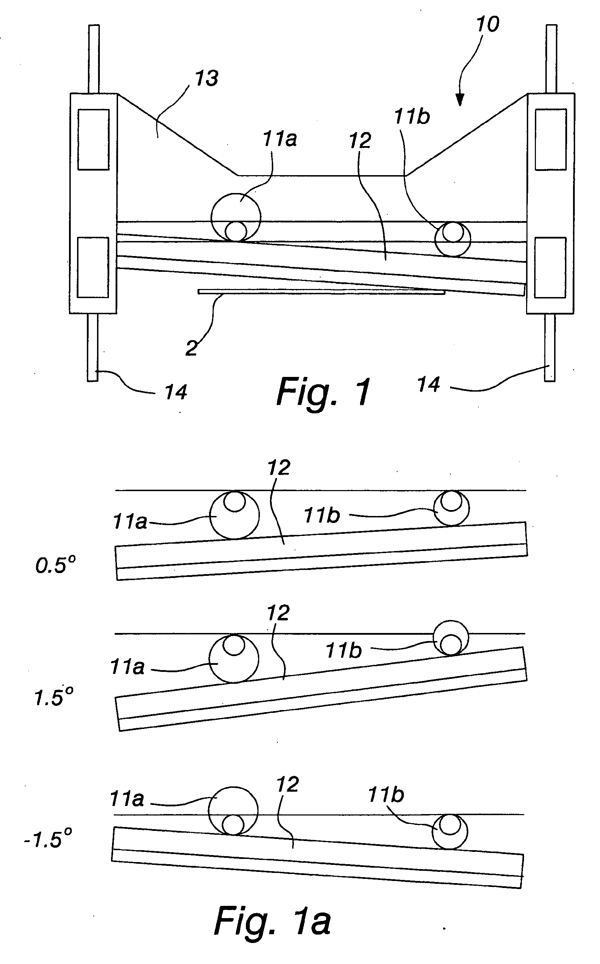

As shown in fig. 1, a cutter 10 of the invention includes a body element 13, which is adapted to travel along vertical linear tracks 14 for performing a desired cutting operation. The body element 13 is fitted with a blade 12 of the cutter, which is pivotable to a range of angular positions. In the illustrated embodiment, the pivoting of the blade is effected by means of an eccentric actuator 11a, 11b. In fig. 1, the cutter blade 12 has been pivoted by means of the eccentric actuator 11a, 11b to a position which enables performing a partial cutting operation for the right-hand edge of a material 2 to be cut. The turning of what is the left-side eccentric actuator 11a in the embodiment of fig. 1 to a downturned position results in the cutter blade 12 pivoting to an approximately horizontal angular position which enables a cross-cutting operation of the material 2 to be processed. Turning the eccentric actuator 11a to its downturned position and the eccentric actuator 11b to its upturned position results in the cutter blade 12 pivoting to an angular position which enables a partial cutting operation of the left-hand edge. Fig. 1a shows a schematic illustration about these various angular positions for the cutter blade, the top figure showing an angular position (0,5°) good for cross-cutting, the middle figure showing an angular position (1,5°) enabling a partial cutting operation of the left-hand edge, and the bottom figure showing an angular position (-1,5°) enabling a partial cutting operation of the right-hand edge. These illustrated angular positions are but a few examples of appropriate values and the selection thereof is influenced e.g. by the stroke of a cutter blade and the thickness of a material to be cut.

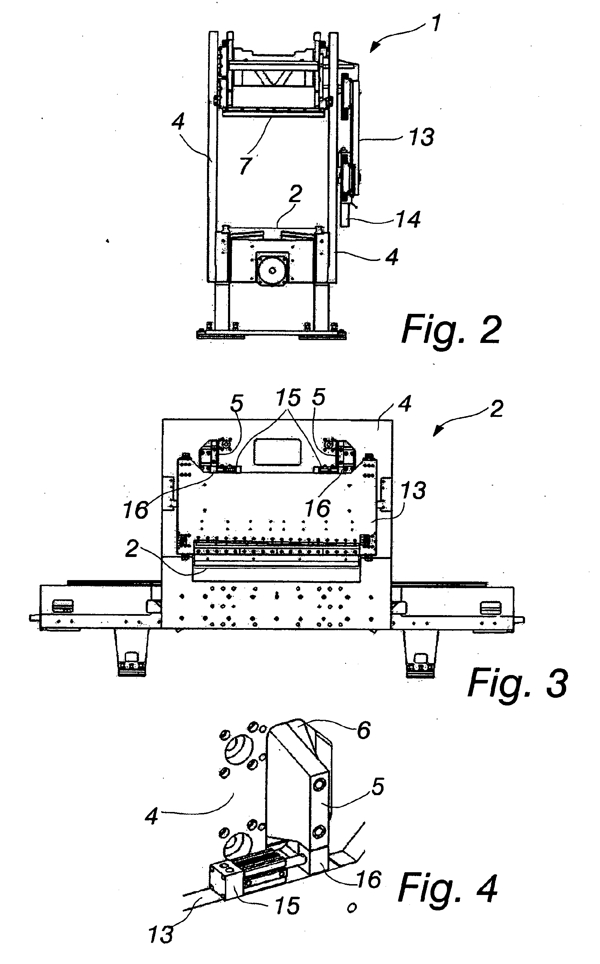

In figs. 2 and 3, a cutter of the invention is illustrated as mounted on a sheet working machine 1, which can be a sheet working machine as set forth e.g. in WO 02/38300 A1 for working, especially piercing, notching and shaping a web-like or sheet-like metal material, e.g. steel plate. The discussed sheet working machine includes at least one tool holder (not shown), which is conveniently C-framed having its top member provided with a top tool magazine and its bottom member with a bottom tool magazine, said tool magazines including a top tool and bottom tools, respectively, and said device including a push plate 7 for applying a working force by means of an intermediate body, not shown, to a single top tool. The cutter 10 has its body 13 mounted on an external surface of the sheet working machine's 1 frame 4 for traveling along linear tracks 14 in a vertical motion.

Fig. 4 shows, in an enlarged view, the attachment of the cutter body 13 on a bracket 5 associated with the push plate, said bracket extending through a slot 6 in the sheet working machine's frame 4 and being engaged with the push plate 7 for moving together with the push plate and transmitting a necessary working force to the cutter. The cutter body 13 is provided with an actuator 15, which includes an engagement element 16 displaceable to a position underneath the bracket 5 for activating the cutter to operate through the intermediary of the push plate 7, and said engagement element being disengageable from the bracket 5, whereby the push plate 7 can be used for applying a working force to tools disposed inside the machine frame 4 for performing normal sheet working operations.

Between the cutter body's bottom edge and the sheet working machine's frame 4 are preferably disposed return elements for returning the cutter 3 to a top position after the completion of a working operation. These elements can be e.g. hydraulically operated, pneumatic or spring-loaded.

The eccentric actuators 11a, 11b can be hydraulically operated, pneumatic, or electrically operated. The actuator 15 for the cutter can also be hydraulic, pneumatic, or electrically operated.

In addition, the cutter can be adapted for pivoting around a substantially vertical axis to a range of angular positions relative to a material feeding direction, whereby a cross-cutting operation or a partial edge-cutting operation by means of a blade adapted for pivoting around a horizontal axis can proceed either substantially perpendicularly to the web feeding direction or at an angular position relative thereto.

## Claims

1. A sheet working machine (1) intended for working, especially for piercing, notching and shaping the web-like or sheet-like metal material (2), said machine comprising a frame (4), at least one tool holder disposed inside the frame for working tools, and a push plate (7) movable by means of drive elements and applying a working force to a desired tool in order to generate a working motion for this particular tool, **characterized in that** a cutter for cutting a web-like or sheet-like metal material is mounted on said sheet working machine, the cutter includes a blade (12) pivotable around a horizontal axis to various angular positions, by means of which the cutter is enabled to perform optionally a cross-cutting operation of the material or a partial cutting operation of at least one edge, and that the cutter (10) is disposed outside the machine frame and adapted to be operated by means of the push plate (7) generating said working force.

2. A cutter as set forth in claim 1, **characterized in that** the cutter includes an eccentric actuator (11a, 11b) or other actuator for turning the blade (12) to a desired angular position.

3. A cutter as set forth in claim 1, **characterized in that** the cutter includes a separate body (13), which is adapted to travel in a substantially vertical direction along linear tracks (14) disposed on the machine frame (4), on an external surface of the frame.

4. A cutter as set forth in any of claims 1 to 3, **characterized in that** the push plate (7) of a sheet working machine is provided with at least one bracket (5) extending outside the frame, and that the cutter (10) is provided with an actuator (15) which is engageable with the bracket (5) for operating the cutter (10) and disengageable from the bracket (5) for allowing the sheet working machine (1) to be used for some other working operation effected by tools disposed inside the frame (4).

5. A cutter as set forth in any of claims 1-4, **characterized in that** the cutter (10) is adapted to pivot around a substantially vertical axis.

## Patentansprüche

1. Blechbearbeitungsmaschine (1), die zum Bearbeiten, besonders zum Lochen, Kerben und Umformen von bahn- oder bogenförmigem Metallmaterial (2) konzipiert ist, wobei die Maschine einen Rahmen (4), mindestens einen Werkzeughalter, der für Bearbeitungswerkzeuge im Inneren des Rahmens enthalten ist, und eine Druckplatte (7) umfasst, die mit Hilfe von Antriebselementen beweglich ist und eine Arbeitskraft auf ein gewünschtes Werkzeug ausübt, um eine Arbeitsbewegung dieses bestimmten Werkzeugs zu erzeugen, **dadurch gekennzeichnet, dass** eine Schneideinrichtung zum Schneiden eines bahn- oder bogenförmigen Metallmaterials an der Blechbearbeitungsmaschine angebracht ist, wobei die Schneideinrichtung eine Klinge (12) umfasst, die um eine horizontale Achse in verschiedene Winkelpositionen drehbar ist, wodurch die Schneideinrichtung in die Lage versetzt wird, optional einen Trennschnittvorgang am Material auszuführen oder einen Teilschnittvorgang an mindestens einem Rand, und dass die Schneideinrichtung (10) außerhalb des Maschinenrahmens angeordnet und derart eingerichtet ist, dass sie mit Hilfe der Druckplatte (7) betrieben wird, die die Arbeitskraft erzeugt.

2. Schneideinrichtung nach Anspruch 1, **dadurch gekennzeichnet, dass** die Schneideinrichtung einen exzentrischen Antrieb (11a, 11b) oder einen anderen Antrieb aufweist, um die Klinge (12) in eine gewünschte Winkelposition zu drehen.

3. Schneideinrichtung nach Anspruch 1, **dadurch gekennzeichnet, dass** die Schneideinrichtung einen getrennten Körper (13) umfasst, der dafür eingerichtet ist, sich in einer im Wesentlichen vertikalen Richtung entlang linearer Führungen (14) zu bewegen, die an einer Außenfläche des Maschinenrahmens (4) angeordnet sind.

4. Schneideinrichtung nach einem der Ansprüche 1 bis 3, **dadurch gekennzeichnet, dass** die Druckplatte (7) der Blechbearbeitungsmaschine mit mindestens einem Haltelager (5) ausgestattet ist, das außerhalb des Rahmens verläuft, und dass die Schneideinrichtung (10) mit einem Antrieb (15) ausgestattet ist, der in das Haltelager (5) einrasten kann, um die Schneideinrichtung (10) zu betreiben, und aus der Rastung im Haltelager (5) lösbar ist, um zu ermöglichen, dass die Blechbearbeitungsmaschine (1) für einige andere Bearbeitungsvorgänge verwendet werden kann, die von innerhalb des Rahmens (4) angeordneten Werkzeuge ausgeführt werden.

5. Schneideinrichtung nach einem der Ansprüche 1 bis 4, **dadurch gekennzeichnet, dass** die Schneideinrichtung (10) dafür eingerichtet ist, sich um eine im Wesentlichen vertikale Achse zu drehen.

## Revendications

1. Machine d'usinage de feuilles (1) destinée à usiner, spécialement à percer, entailler et façonner le matériau en forme de bande ou de feuille (2), ladite machine comportant un bâti (4), au moins un porte-outil disposé à l'intérieur du bâti pour les outils d'usinage et une plaque de poussée (7) mobile au moyen d'éléments moteurs et appliquant une force d'usinage à un outil désiré afin de générer un mouvement d'usinage pour cet outil particulier, **caractérisée en ce qu'**une scie servant à couper un matériau métallique en forme de bande ou de feuille est montée sur ladite machine d'usinage de feuilles, que la scie comprend une lame (12) pouvant pivoter autour d'un axe horizontal vers diverses positions angulaires et grâce à laquelle la scie peut réaliser en option une opération de coupe transversale du matériau ou une opération de coupe partielle d'au moins un bord et que la scie (10) est disposée en dehors du bâti de la machine et apte à être actionnée au moyen de la plaque de poussée (7) générant ladite force d'usinage.

2. Scie selon la revendication 1, **caractérisée en ce que** la scie comprend un actionneur excentrique (11a, 11b) ou autre actionneur pour tourner la lame (12) à une position angulaire désirée.

3. Scie selon la revendication 1, **caractérisée en ce que** la scie comprend un corps séparé (13) qui est apte à se déplacer dans un sens sensiblement vertical le long de pistes linéaires (14) disposées sur le bâti de la machine (4), sur une surface externe du bâti.

4. Scie selon l'une quelconque des revendications 1 à 3, **caractérisée en ce que** la plaque de poussée (7) d'une machine d'usinage de feuilles est équipée d'au moins une console (5) s'étendant en dehors du bâti et que la scie (10) est équipée d'un actionneur (15) qui peut s'engager dans la console (5) pour actionner la scie (10) et se dégager de la console (5) pour permettre d'utiliser la machine d'usinage de feuilles (1) pour une autre opération d'usinage effectuée par des outils disposés à l'intérieur du bâti (4).

5. Scie selon l'une quelconque des revendications 1 à 4, **caractérisée en ce que** la scie (10) est apte à pivoter autour d'un axe sensiblement vertical.
